# EUROPEAN PATENT SPECIFICATION

(11) **EP 1 637 921 B1**
(45) Date of publication and mention of the grant of the patent: **02.04.2008**
(21) Application number: 05020282.9
(22) Date of filing: 16.09.2005
(51) Int. Cl.: G02F 1/13, H04M 1/02

(54) **Liquid crystal display device and a mobile information terminal including a liquid crystal display device**
Flüssigkristallanzeigevorrichtung und mobiles Informationsendgerät mit einer Flüssigkristallanzeigevorrichtung
Dispositif d'affichage à cristaux liquides et terminal d'information mobile comprenant un dispositif d'affichage à cristaux liquides

(30) Priority: 17.09.2004 JP 2004271565
(43) Date of publication of application: 22.03.2006
(73) Proprietor: SANYO ELECTRIC CO., LTD., Moriguchi-shi, Osaka (JP); Tottori Sanyo Electric Co., Ltd., Tottori-shi, Tottori (JP)
(72) Inventor: Hayano, Satoshi Tottori Sanyo Electric Co., Ltd., Tottori-shi, Tottori (JP); Kishi, Hideaki Tottori Sanyo Electric Co., Ltd., Tottori-shi Tottori (JP)
(74) Representative: HOFFMANN EITLE

(56) References cited:
- US-A1- 2002 191 126
- US-A1- 2003 169 383
- US-B1- 6 525 786
- PATENT ABSTRACTS OF JAPAN vol. 2003, no. 12, 5 December 2003 (2003-12-05) -& JP 2004 118125 A (NEC SAITAMA LTD), 15 April 2004 (2004-04-15)

## Description

### BACKGROUND OF THE INVENTION

### FIELD OF THE INVENTION

The present invention relates to a liquid crystal display device capable of double-side irradiation by one backlight unit and a mobile information terminal provided with such liquid crystal display device.

In recent years, mobile phones, PDAs or mobile-type information terminals that function as telephones and are capable of displaying more messages than ever have been commercially produced on a wider scale. Among these devices, beyond providing the service of conventional telephones, mobile phones in particular are now capable of connecting to the Internet and even include various other functions such as e-mail, information search and navigation by displaying maps and guiding the user to certain destinations. In the future, more types of software are expected to be installed in these devices and as such, they have become essential to everyday life.

Since the installation of various types of software has become possible, demand for mobile phones which are more convenient to use, lighter and portable has arisen, and as a result, various kinds of mobile phones have been developed and commercially produced.

Such kind of mobile phones are roughly divided into two: the bar type and the folding type. The folding type, in which liquid crystal display panels are installed on both (the front and rear) sides of a mobile phone to enable caller identification without lifting or answering the phone as well as the display of time or the like, have recently become widespread.

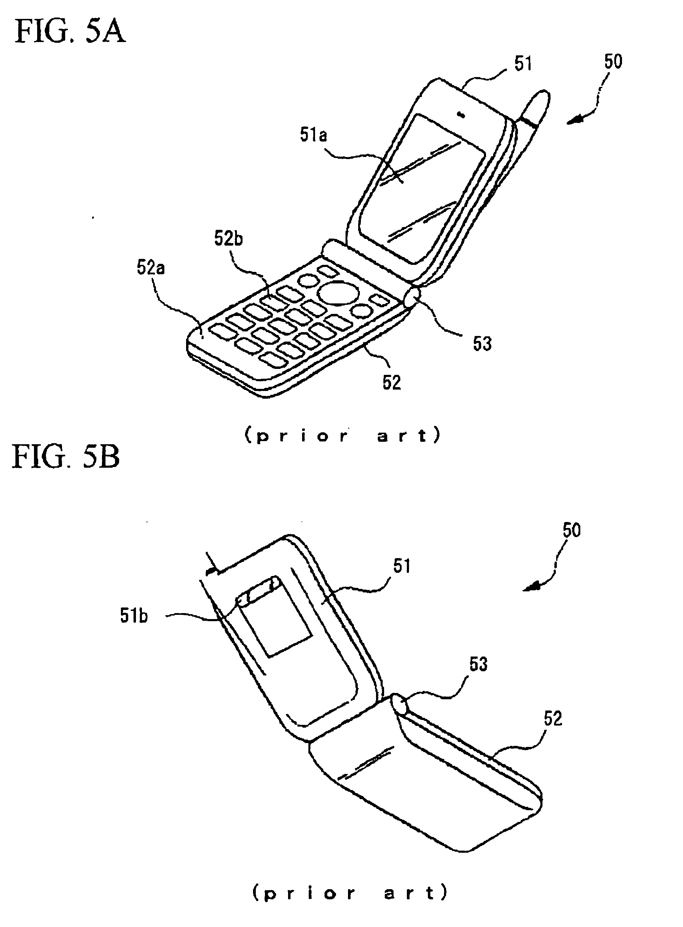

Fig. 5 illustrates a conventional folding type of mobile phone, where Fig. 5A is a perspective view of the phone viewed from one direction when it is open or in use, and Fig. 5B is a perspective view of the phone viewed from another direction.

As shown in Figs. 5A and 5B, the folding type mobile phone 50 generally comprises an upper housing 51 and a lower housing 52 connected together by a hinge mechanism 53 in a freely openable and closable manner, whereby a double-side emission type liquid crystal display panel is provided for the upper housing 51, and an operation panel 52a of the lower housing 52 is provided with an input keyboard 52b for performing dial operation or the like.

The double-side emission type liquid crystal display panel consists of a main liquid crystal display panel 51a whose main display surface serves as the operation face of the mobile phone and an auxiliary liquid crystal display panel 51b disposed on the exterior surface of the upper housing 51 of the mobile phone 50.

According to the mobile phone 50 with such an installed liquid crystal display panel, the auxiliary liquid crystal display panel 51b is located on the exterior surface of the upper housing 51 even when both housings 51, 52 are folded by the hinge mechanism 53, so that various information can be viewed from the auxiliary display surface without opening both housings 51, 52.

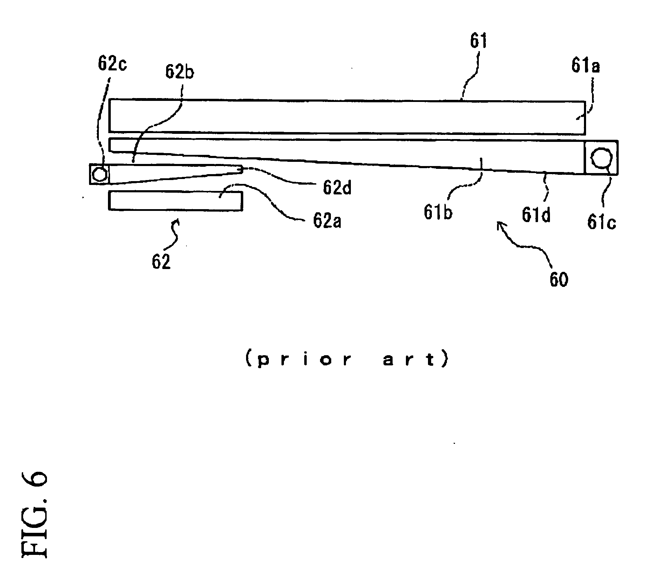

Fig. 6 is a side view schematically showing a publicly known liquid crystal display panel used in this type of folding mobile phone.

The liquid crystal display panel 60 includes a main liquid crystal display panel 61 serving as the main display surface and an auxiliary liquid crystal display panel 62 acting as the auxiliary display surface, where the main liquid crystal display panel 61 consists of a semi-transmissive liquid crystal display panel 61a and a main backlight 61b irradiating the liquid crystal display panel 61a, with the main backlight 61b comprising a light source 61c and a light guiding plate 61d.

Further, the auxiliary liquid crystal display panel 62 includes a semi-transmissive liquid crystal display panel 62a smaller than that of the main liquid crystal display panel 61 and an auxiliary backlight 62b irradiating the liquid crystal display panel 62a, with the auxiliary backlight 62b comprising a light source 62c and a light guiding plate 62d.

However, since the liquid crystal display panel 60 requires the main backlight 61b and the auxiliary backlight 62b for the main and auxiliary liquid crystal display panels 61, 62 respectively, the light sources 61c, 62c are in turn necessary for each backlight, resulting in a larger mobile phone with a greater number of parts. To address such problems, a double-sided liquid crystal display device capable of irradiating two liquid crystal display panels by only one backlight unit has been introduced in Japanese Laid-Open Patent Publication No. 2002-287144 (Fig. 4, columns [0025] to [0030]), for example.

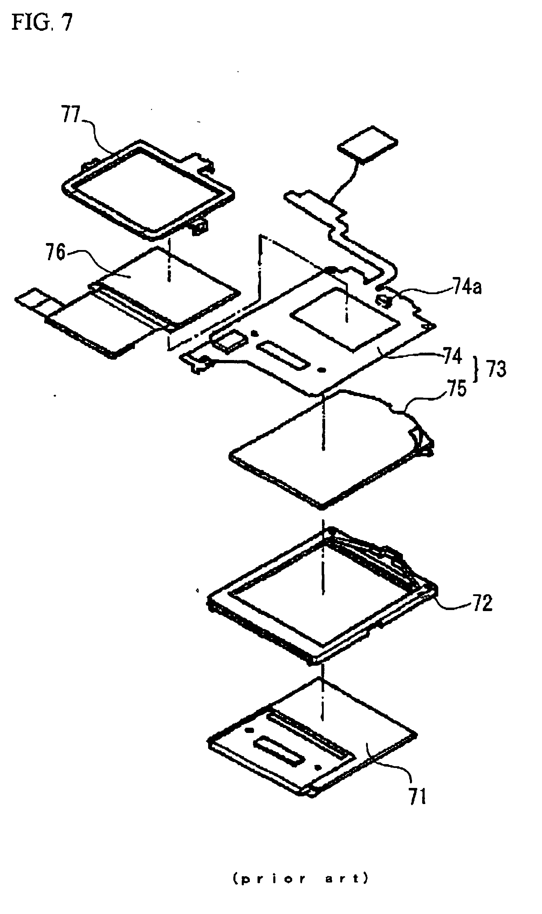

Fig. 7 is an exploded perspective view of the double-sided liquid crystal display device described in the above-mentioned patent document, where the double-sided liquid crystal display device includes an inner liquid crystal display panel 71, serving as the main liquid crystal display panel, a holder 72 for housing the main liquid crystal display panel 71, a backlight unit 73 and an outer liquid crystal display panel 76, i.e. the auxiliary liquid crystal display panel, where the backlight unit 73 consists of a light guiding plate 75 and a flexible board 74.

The backlight unit 73 of the aforesaid double-sided liquid crystal display device is assembled in the following manner. Firstly, the light guiding plate 75 is inserted into the inner portion of the holder 72, and the liquid crystal display panel 71 is attached to the bottom surface of the light guiding plate 75, upon the top portion of which the flexible board 74 is disposed. The outer liquid crystal display panel 76 is then affixed to the holder 72 by a frame body 77 on top of the flexible board 74. Furthermore, an emission source LED 74a is attached on one side of the flexible board 74.

However, since the above-described well-known liquid crystal display panel 60 requires two sets of backlight units represented by the main backlight 61b and the auxiliary backlight 62b, the number of parts increases, leading to greater manufacturing cost and making assembly more complicated, while product thickness also increases. On the other hand, since the two (main and auxiliary) liquid crystal display panels in the double-sided liquid crystal display device described in the above-described patent document can share one backlight unit, provision for another backlight unit becomes unnecessary.

However, due to the constitution of the double-sided liquid crystal display device in that the inner and outer liquid crystal display panels are disposed on the front and rear portions of the light guiding plate and are supported by the light guiding plate, the light guiding plate must have a certain level of mechanical strength, but in this case it becomes impossible to make the light guiding plate thinner, since it cannot be sufficiently mechanically strong because it is housed only in the holder, while the frame body must be located on the portion of the outer liquid crystal display panel. This therefore results in an increase in the number of parts, making it difficult to design a thinner liquid crystal display panel.

In addition, since the subject double-sided liquid crystal display device does not deal with the problem of noise, certain difficulties arise when it is applied to the mobile phone, particularly, grounding the mobile phone securely when vibration naturally occurs such as when it is frequently carried around by a mobile user.

Also the configuration of JP-A-2004-118125 which discloses a liquid crystal display device having the features of the preamble of claim 1 does not provide for a sufficient reduction in thickness. US-A-2002/0191126 further discloses the use of a metal shielding casing made of sheet metal to house only one liquid crystal display panel.

### SUMMARY OF THE INVENTION

Consequently, the present invention has been created to solve the abovementioned problems of prior art, and particularly aims to provide a liquid crystal display device where further slimness is achieved while maintaining a predetermined mechanical strength and the noise problem is likewise addressed.

This object is solved by the subject matter defined in Claim 1. Embodiments are named in the dependent claims.

### BRIEF DESCRIPTION OF THE DRAWINGS

Fig. 1 is an exploded perspective view of the liquid crystal display device according to an embodiment of the present invention.
Fig. 2 shows the liquid crystal display device assembly of Fig. 1; where Fig. 2A is a plane view and Fig. 2B is a cross-sectional view taken along IIB-IIB line of Fig. 2A.
Fig. 3 shows a circuit board installed in the liquid crystal display device of the present invention, where Figs. 3A and 3B are front and rear perspective views thereof, respectively.
Fig. 4 shows a sheet metal frame installed in the liquid crystal display device of the present invention, where Figs. 4A and 4B are front and rear perspective views thereof, respectively.
Fig. 5 illustrates a conventional folding type of mobile phone, where Fig. 5A is a perspective view of the phone viewed from one direction when it is open or in use, and Fig. 5B is a perspective view of the phone viewed from another direction.
Fig. 6 is a side view schematically showing a publicly known liquid crystal display panel used in this type of folding mobile phone.
Fig. 7 is an exploded perspective view of a conventional double-sided liquid crystal display device.

### PREFERRED EMBODIMENTS OF THE INVENTION

Preferred embodiments of the present invention will be described hereafter in relation to the drawings. Note that the embodiments shown below exemplify a liquid crystal display device for realizing the technical concept of the present invention and a mobile information terminal including the liquid crystal display device. These embodiments are not intended to restrict the present invention to this type of liquid crystal display device and this mobile information terminal including such liquid crystal display device, since other embodiments within the scope of the claims are equally applicable.

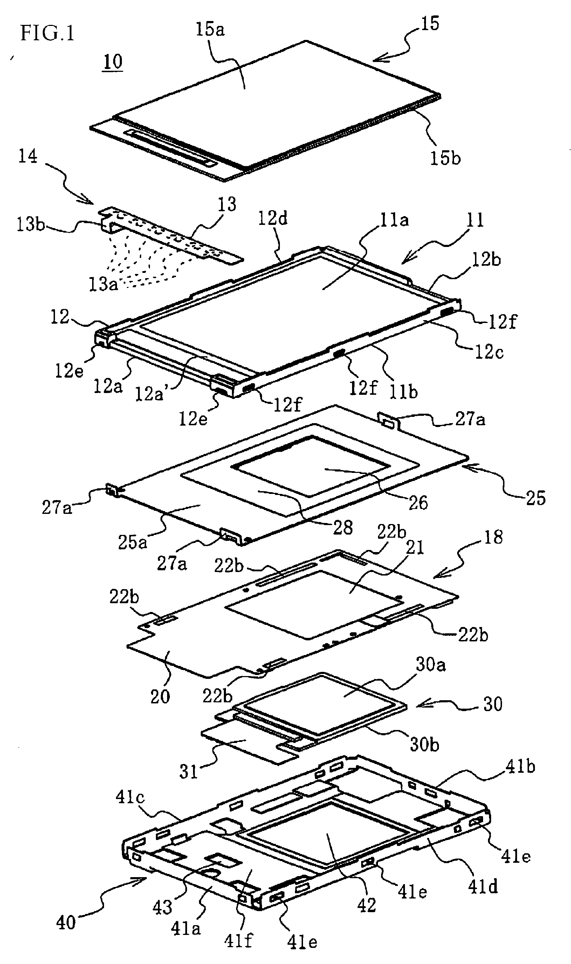

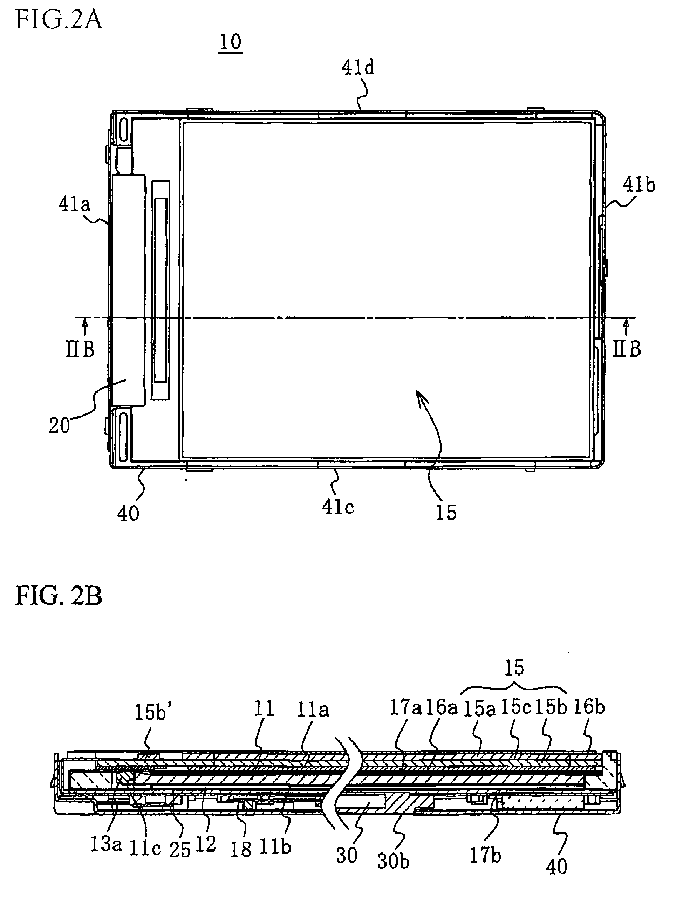

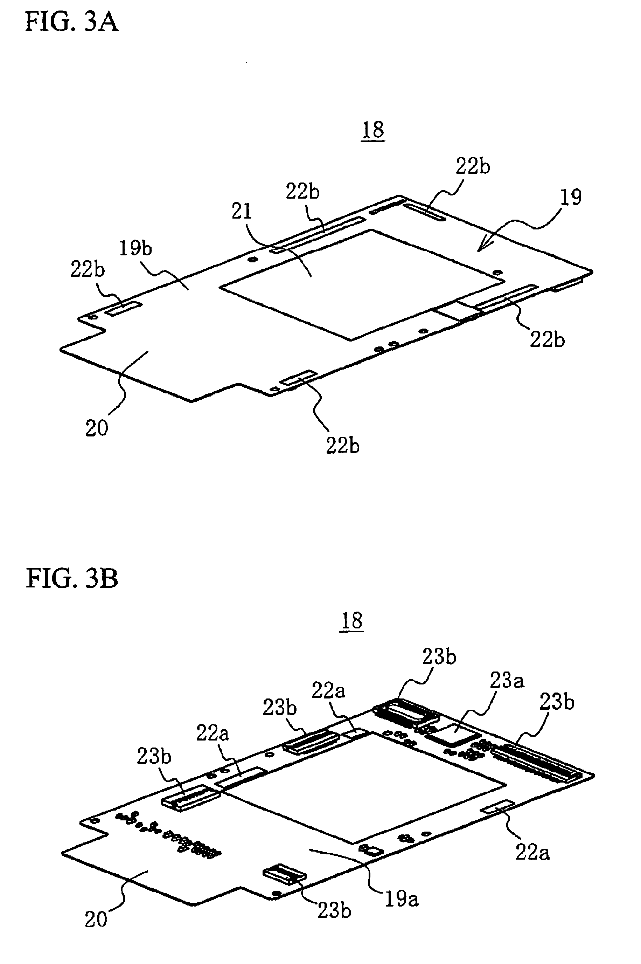

Fig. 1 is an exploded perspective view of the liquid crystal display device according to an embodiment of the present invention, Fig. 2 shows the liquid crystal display device assembly of Fig. 1, where Fig. 2A is a plane view and Fig. 2B is a cross-sectional view taken along HB-IIB line of Fig. 2A, while Fig. 3 shows a circuit board installed in the liquid crystal display device of the present invention, where Figs. 3A and 3B are front and rear perspective views thereof, respectively.

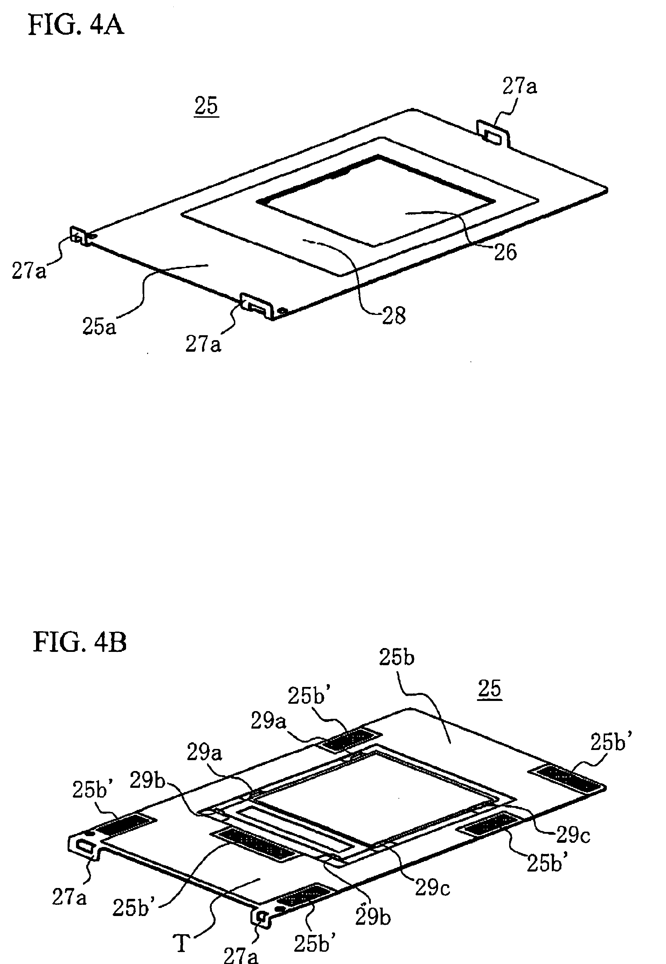

Fig. 4 shows a sheet metal frame installed in the liquid crystal display device of the present invention, where Figs. 4A and 4B are front and rear perspective views thereof, respectively. Meanwhile, the description hereinafter made of the front and rear portions of the circuit board and the sheet metal frame shown in Figs. 3 and 4, is based on the assumption that the first liquid crystal display panel is provided on the front surface of the gadget in which it is applied, such as a folding type of mobile phone, and the second liquid crystal display panel is provided on the rear surface of the gadget.

The present invention refers to a liquid crystal display device equipped with a double-side emission type light guiding plate, and in particular, a liquid crystal display device 10 that includes a light guiding plate 11 which leads out light to both the front and rear faces of the light guiding plate, a first liquid crystal display panel 15 disposed on the front face 11a of the light guiding plate 11, and a smaller second liquid crystal display panel 30 disposed on the rear face 11b of the light guiding plate 11. The device is constituted in such manner that a sheet metal frame 25 having a thin plate shape and substantially the same size as that of the light guiding plate 11, and an opening 26 having substantially the same size as that of the display surface of the second liquid crystal display panel 30 is brought into contact with the rear face 11b of the light guiding plate 11, whereby the first liquid crystal display panel 15, the light guiding plate 11 and the second liquid crystal display panel 30 are stacked, and a main body cover 40 covers the stacked body consisting of the light guiding plate and the panels and affixes it to expose the surface of the second liquid crystal display panel 30 from an opening 42 provided in the main body cover 40.

As shown in Figs. 1 and 2, the light guiding plate 11, made of a thin plate shaped body of transparent material leads light outputted from a light source 14, from one end portion 11c of the light guiding plate 11 to the inner portion thereof, and leads the light toward the front face 11a (to the first liquid crystal display panel 15) and the rear face 11b (to the second liquid crystal display panel 30) of the light guiding plate 11. To form the light guiding plate, acrylic resin material may be used, preferably with a thickness of about 0.6 mm. The light guiding plate 11 is fitted into a picture frame-shaped frame body 12.

The frame body 12 into which the light guiding plate 11 is fitted is rectangular in shape and consists of frame pieces 12a to 12d having a predetermined width and height, and large enough to house the first liquid crystal display panel 15, the light guiding plate 11, optical sheets 17a, 17b and the light source 14, as shown in Figs. 1 and 2B.

Among the frame pieces 12a to 12d, the frame pieces 12c, 12d facing each other are extended so as to be longer than the light guiding plate 11, the frame piece 12a being provided in such manner that the tip thereof forms a gap 12a' between the frame piece 12a and the light guiding plate 11 when the light guiding plate 11 is fitted into the frame body 12. The light source 14 is inserted in the gap 12a' when the liquid crystal display panels are assembled.

The first liquid crystal display panel 15, the optical sheets 17a, 17b and the light guiding plate 11 are fitted into the picture-frame shaped frame body 12. One assembly is thus formed by fitting each of these parts into the frame body 12, thereby simplifying the assembly of the liquid crystal display panel in the next process. In addition, a specific member for affixing the first liquid crystal display panel 15 is rendered unnecessary, thereby facilitating the assembly of the liquid crystal display panels, while making it mechanically stronger and more durable.

In the light source 14, a plurality of LEDs (Light Emitting Diode) 13a are arrayed in line and attached to a strip of board 13, and power is supplied via a wiring 13b connected to the board. Note that description is based on the assumption that the light sources are LEDs, but are not limited to the same, such that a fluorescent lamp or the like, for example, may be used.

A semi-transmissive reflective liquid crystal display panel is used as the first liquid crystal display panel 15. As shown in Fig. 2B, the first liquid crystal display panel 15 is constituted by filling the first and second boards 15a, 15b made of glass facing each other with liquid crystal 15c via a sealing material, thereby joining them together as a unit. The second board 15b which is longer than the first board 15a is set in such manner as to allow the end portion thereof to protrude from the edge of the first board 15a when the two boards are joined. Then, the light source 14 is attached to the rear surface of the protruding portion 15b'. A more detailed description of the semi-transmissive reflective liquid crystal display panel has been omitted because the type of panel used for the invention is already publicly known.

Further, polarizing plates 16a, 16b are severally disposed on the front and rear faces of the first liquid crystal display panel 15, and the optical sheet 17a consisting of either a light diffusion sheet, a prism sheet or Lhe like is disposed between the first liquid crystal display panel 15 and the light guiding plate 11.

Thereafter, a circuit board 18, which is a flexible printed circuit (FPC) on which a graphic controller, a light source (LED) driver, a semiconductor device for driving liquid crystal, and the like are mounted, is connected to one end of the first liquid crystal display panel 15. As shown in Fig. 3, the circuit board 18 consists of a control board 19 having substantially the same size as that of the first liquid crystal display panel 15, and a connection portion 20 connecting the control board 19 to the first liquid crystal display panel 15. The circuit board 18 can be folded at the connection portion 20 when it is assembled.

The front face 19b of the circuit board 18 [refer to Fig. 3A], that is, the surface contacting the rear face 25b of the sheet metal frame 25 [refer to Fig. 4B], is provided with a plurality of earth contact portions 22b provided near the periphery of the circuit board 18.

Furthermore, on the rear face 19a of the circuit board 18, a semiconductor device 23a for driving liquid crystal and connectors 23b for external circuit connection and the like are attached within the vicinity of the opening 21 of the circuit board, and a plurality of earth contact portions 22a are further provided. The earth contact portions 22a and 22b which are formed by a coating of conductive adhesive agent or by means of conductive adhesive tape are connected to each other on the front face of the board.

A semi-transmissive reflective liquid crystal display panel is also used to form the second liquid crystal display panel 30, which is constituted by inserting or sandwiching a liquid crystal layer between a first board 30a and a second board 30b, both made of glass or the like facing each other and thereafter bonded together by a sealing a material to form a unit. The second board 30b serves as a display surface.

A flexible board 31 is then connected to the liquid crystal display panel 30, while the other end thereof is connected to the circuit board 18 via a connector.

The size of the sheet metal frame 25 is substantially the same as that of the picture frame-shaped frame body 12, and the size of its opening 26 is also substantially the same as that of the display surface of the second liquid crystal display panel 30 on the front face of the sheet metal frame 25. A plurality of hooking pieces 27a is made to reside on the peripheral edge thereof. The sheet metal frame 25 should preferably consist of thin metallic material such as aluminum, and have a thickness of about 0.2 mm.

On one side 25a of the sheet metal frame 25, that is, the side that makes contact with the light guiding plate 11, black tape 28 is applied within the vicinity of the opening 26 for the purpose of preventing the leakage of light.

Further, on the rear face 25b of the sheet metal frame 25, that is, the side on which the second liquid crystal display panel 30 is installed, a plurality of protruding pieces 29a, 29b, 29c jutting from the surface are formed on three sides on the peripheral edge of the opening 26. The protruding pieces 29a, 29b, 29c are made to come in contact with the outer peripheral surface of the second liquid crystal display panel 30 to align the same. The second liquid crystal display panel 30 and an optical sheet (not shown) provided on the rear face of the second liquid crystal display panel 30 are stably fixed by the protruding pieces 29a, 29b, 29c and the main body cover 40 (described later). Specifically, the second liquid crystal display panel 30 and the optical sheet provided on the rear face of the second liquid crystal display panel 30 are aligned on the three sides corresponding to the protruding pieces 29a, 29b, 29c covered by the main body cover 40, and set in place by pushing the outer periphery of the second liquid crystal display panel 30 against the periphery of the opening 42 provided in the main body cover 40. In this manner, an exclusive frame body for fixing the panel 30 or the like is rendered unnecessary, thereby simplifying the process of assembly.

As shown in Fig. 4B, a plurality of earth contact portions 25b' are formed on the outer peripheral edges of the rear face 25b of the sheet metal frame 25, and double-faced adhesive tape T is adhered on areas excluding the electrodes 25b' and the opening 26. Each earth contact portion 25b' is formed on the frame by applying a coating of conductive adhesive agent or by affixing conductive adhesive tape thereon.

After attaching double-faced adhesive tape T on the rear face 25b of the sheet metal frame 25 and coating the earth contact portions 25b' with conductive adhesive agent, the circuit board 18 is then attached on one side of the double-faced adhesive tape T and the earth contact portions 22b of the circuit board 18 are adhered by means of the conductive adhesive agent during assembly of the liquid crystal display panel. Therefore, the circuit board 18 is firmly fixed on the sheet metal frame 25, and the earth contact portions 22b are securely connected.

As described above, by using the sheet metal frame 25 made of metallic material, a predetermined mechanical strength is maintained, as the sheet metal frame 25 is brought into contact with the light guiding plate 11, and they can be retained while being reinforced mechanically

Since the predetermined mechanical strength of the sheet metal frame 25 can be maintained when it is made of thin material, the overall liquid crystal display device 10 can effectively be made thinner even with the addition of the sheet metal frame 25 and by making the thickness of the light guiding plate and the first and second liquid crystal display panels even thinner. In addition, the sheet metal frame 25 is capable of smoothing out the creases of the optical sheet as well as preventing the occurrence of creases by bringing the sheet metal frame 25 into contact with the optical sheet that is laid between the frame and the light guiding plate 11. Moreover, because the sheet metal frame 25 is a conductive material, a good electrical circuit connection can be formed between the circuit board 18 and the main body cover 40 (described later) and earth connection can thus be formed through such circuit connection.

Note that material for the sheet metal frame 25 is not limited to metallic material as it may comprise a sheet material made of resin or the like having a predetermined strength.

As shown in Figs. 1 and 2, the main body cover 40 serves as a cover for the stacked body formed by stacking the second liquid crystal display panel 30, the sheet metal frame 25, the light guiding plate 11, the first liquid crystal display panel 15, and the like. The main body cover 40 is made of metallic material in the shape of a shallow box having low-height side plates 41a to 41d lying on its outer periphery, has an opening 42 large enough to expose the display surface of the second liquid crystal display panel 30 on a bottom plate 41f, and a plurality of openings 43 from which the connectors 23b provided on the circuit board 18 are exposed. It is preferable that areas of the bottom plate 41f, which come into contact with the earth contact portions 22a of the circuit board 18, be made to protrude inwardly to form jutting portions (not shown) in order to improve contact with the earth contact portions 22a during assembly. Further, the metallic material of the sheet metal frame 25 would preferably be stainless steel material but may nevertheless be another kind of metallic or resin material.

The assembly of a liquid crystal display device including a double-side emission type light guiding plate will be described hereafter.

Firstly, the light guiding plate 11 is fitted into the picture frame-shaped frame body 12, and one or a plurality of optical sheets 17a are mounted on one side 11a of the fitted light guiding plate 11, and the first liquid crystal display panel 15 is fitted into the frame body 12 from above the optical sheet 17a. Further, similarly, one or a plurality of optical sheets 17b are also mounted on the other side 11b of the light guiding plate 11, and a light-shielding sheet (not shown) having an opening to expose the display surface of the second liquid crystal display panel 30 is attached to the optical sheet 17b.

The light-shielding sheet intercepts light coming from the light guiding plate 11 to be irradiated to the outer periphery of the small second liquid crystal display panel 30. Further, by fitting the first liquid crystal display panel 15, the optical sheets 17a, 17b and the light guiding plate 11 into the picture frame-shaped frame body 12, these parts being housed into the frame body 12 to form one assembly, thereby simplifying the process of assembly of the liquid crystal display panel in the next stage. Additionally, because a member for stably fixing the first liquid crystal display panel is rendered unnecessary, assembly of the liquid crystal display panel is further simplified, while improving its mechanical strength.

Subsequently, the sheet metal frame 25 is brought into contact with the rear face of the light-shielding sheet of the assembly, and the frame is fixed by engaging the hooking pieces 27a of the sheet metal frame 25 with the hooking protrusions 12e of the frame body 12.

Further, the double-faced adhesive tape T is attached on the sheet metal frame 25 while a coating of conductive adhesive agent is applied to the earth contact portions 25b' in advance, and the second liquid crystal display panel is inserted and sandwiched between the protruding pieces 29a to 29c within the vicinity of the opening 26.

Then, the circuit board 18 is attached on one side of the double-faced adhesive tape T and the earth contact portions 22b of the circuit board 18 are electrically connected to the earth contact portions 25b' of the sheet metal frame 25 via the conductive adhesive agent.

The liquid crystal display panel assembled in this manner is covered by the main body cover 40 from the direction of second liquid crystal display panel 30, the hooking holes 41e of the main body cover 40 being hooked to the hooking protrusions 12f of the frame body 12 to assemble the liquid crystal display device 10 including the double-side emission type light guiding plate. By covering the assembly with the main body cover 40 in the manner described above, the connectors 23b of the circuit board 18 are exposed from the openings provided on the main body cover 40, and connection to other units is achieved via the connectors 23b. Further, the earth contact portions 22a of the circuit board 18 are electrically connected to the inner wall surface of the main body cover 40.

Under this method of assembly, since the earth contact portions 22a, 22b of the circuit board 18 are electrically connected to the earth contact portions 25b' of the sheet metal frame 25 and the main body cover 40, control of noise occurrence becomes possible. In addition, since the first and second liquid crystal display panels 15, 30 and the circuit board 18 are covered by the main body cover, the entire assembly is shielded to minimize the effect of electromagnetic waves.

Having achieved the objective of producing a slimmer liquid crystal display device, mobile phones equipped with the above described liquid crystal display device 10 can likewise be made thinner, as shown in Fig. 5. Note that the liquid crystal display device 10 may be installed not only into mobile phones but may also be applied to other mobile information terminals such as PDAs.

In the present invention the earth contact portions are provided at least on one portion of the front face and the rear face of the circuit board controlling the first and second liquid crystal display panels, and are connected to the metal member that is provided facing the surface of the circuit board upon which the earth contact portions are formed, thereby enabling the circuit board to be grounded, eliminating the need to take further measures to control noise in the device (mobile information terminal such as a mobile phone) when the liquid crystal display panel is used therein.

According to the features of Claim 2, a utility area of the circuit board can be expanded because semiconductor devices, connectors, wiring patterns and the like can be disposed within the vicinity of the opening.

According to the invention, the liquid crystal display device further comprises the sheet metal frame provided between the circuit board and the light guiding plate, and the circuit board can be grounded by connecting the sheet metal frame to the earth contact portions provided on the circuit board.

According to the features of Claim 3, the sheet metal frame is formed by a thin metal plate, so that mechanical strength thereof is not diminished even if the thickness of the first and second liquid crystal display panels and the light guiding plate is made thinner. Thus, the thickness of the first and second liquid crystal display panels and the light guiding plate can be made thinner by using the sheet metal frame, and further slimness of the entire liquid crystal display device can be achieved.

According to the features of Claim 4, since the circuit board is in such condition that the double-faced adhesive tape and the conductive adhesive agent are adhered to the sheet metal frame, the circuit board is firmly fixed and the earth contact portions are securely connected. As a result, not only the occurrence of noise can be reduced but circuit failure or the like due to contact failure can be prevented as well.

According to the features of Claim 5, the metal member comprises the main body cover provided on the side of the circuit board in which the earth contact portions are formed, and the circuit board can thus be grounded by connecting the main body cover to the earth contact portions provided on the circuit board. Further, since the main body cover made of a metallic material integrally covers the stacked body formed by stacking the first and second liquid crystal display panels, the light guiding plate and the like, the effect generated by electromagnetic waves can be minimized and higher noise reduction can be achieved.

According to the features of Claim 6, by fitting the light guiding: plate and the first liquid crystal display panel into the picture frame-shaped frame body, a member for fixing the first liquid crystal display panel becomes unnecessary, thereby simplifying assembly of the liquid crystal display panel while improving mechanical strength thereof.

## Claims

1. A liquid crystal display device, comprising a light guiding plate (11) that leads out light severally to both the front and rear sides of the light guiding plate;
a first liquid crystal display panel (15) disposed on one side of the light guiding plate;
a second smaller.liquid crystal display panel (30) disposed on the other side of the light guiding plate, wherein the liquid crystal display panels and the light guiding plate are stacked;
a circuit board (18), which controls the first and second liquid crystal display panels and disposed between the light guiding plate (11) and the second liquid crystal display panel (30) **characterized in that** the circuit board has earth contact portions at least on one portion of the front face and the rear face thereof, and by a sheet metal frame having substantially the same size as that of the light guiding plate (11) and an opening (26) of substantially the same size as that of the display surface of the second liquid crystal display panel (30), the sheet metal frame being in contact with the earth contact portions and arranged between the circuit board (18) and the light guiding plate.

2. The liquid crystal display device according to Claim 1, wherein the circuit board (18) has an opening (21) of a predetermined size and the said second liquid crystal display panel (30) is disposed in the opening.

3. The liquid crystal display device according to Claim 1, wherein the sheet metal frame (25) is made of a thin metal plate.

4. The liquid crystal display device according Claim 1, wherein the surface of the sheet metal frame (25) facing the circuit board (18) is in such condition that conductive adhesive agent is coated on areas where the earth contact portions (22a, 22b) of the said circuit board (18) contact, and double-faced adhesive tape is attached to other areas, the circuit board (18) being affixed to one side of the double-faced adhesive tape, and the earth contact portions (22a, 22b) of the circuit board are attached to the sheet metal frame by means of conductive adhesive agent.

5. The liquid crystal display device according to Claim 1, further comprising a main body cover (40) made of metallic material that has a rectangular-shaped bottom plate (41f) and side plates (41a-d) having a predetermined height residing on the periphery of the bottom plate and is provided to cover a stacked body consisting of the light guiding plate (11), the first (15) and second (30) liquid crystal display panels and the like, and an opening (42), having substantially the same size as that of the display surface of the second liquid crystal display panel, provided on the bottom plate thereof and that is provided on the rear surface of the circuit board (18).

6. The liquid crystal display device according to Claim 1, further comprising a picture frame-shaped frame body (12) large enough to house the said light guiding plate (11), wherein the light guiding plate (11), a light source (14) irradiating light on one end (11c) of the light guiding plate (11), and the first liquid crystal display panel (15) are fitted into the said frame body (12).

## Patentansprüche

1. Flüssigkristallbildschirmvorrichtung umfassend eine Lichtführungsplatte (11), welche Licht getrennt sowohl an der Vorder- als auch der Rückseite der Lichtführungsplatte herausführt;
wobei ein erstes Flüssigkristallbildschirmpaneel (15) an einer Seite der Lichtführungsplatte angeordnet ist;
wobei ein zweites, kleineres Flüssigkristallbildschirmpaneel (30) an der anderen Seite der Lichtführungsplatte angeordnet ist, wobei die Flüssigkristallbildschirmpaneele und die Lichtführungsplatte gestapelt sind;
eine Leiterplatte (18), welche die ersten und zweiten Flüssigkristallbildschirmpaneele steuert und welche zwischen der Lichtführungsplatte (11) und dem zweiten Flüssigkristallbildschirmpaneel (30) angeordnet ist, **gekennzeichnet dadurch, dass** die Leiterplatte Erdkontaktabschnitte zumindest an einem Abschnitt von deren Vorderseite oder deren Rückseite aufweist, und durch einen Blechrahmen, welcher im Wesentlichen die gleiche Größe wie die Lichtführungsplatte (11) und eine Öffnung (26) von im Wesentlichen der gleichen Größe wie die der Bildschirmoberfläche des zweiten Flüssigkristallbildschirmpaneels (30) aufweist, wobei der Blechrahmen in Kontakt mit den Erdkontaktabschnitten steht und zwischen der Leiterplatte (18) und der Lichtführungsplatte angeordnet ist.

2. Flüssigkristallbildschirmvorrichtung gemäß Anspruch 1,
wobei die Leiterplatte (18) eine Öffnung (21) einer vorgegebenen Größe aufweist und das zweite Flüssigkristallbildschirmpaneel (30) in der Öffnung angeordnet ist.

3. Flüssigkristallbildschirmvorrichtung gemäß Anspruch 1,
wobei der Blechrahmen (25) aus einer dünnen Metallplatte hergestellt ist.

4. Flüssigkristallbildschirmvorrichtung gemäß Anspruch 1,
wobei die Oberfläche des Blechrahmens (25), welche zur Leiterplatte (18) hin zeigt, in einem solchen Zustand ist, dass ein leitfähiges Bindemittel in Flächen aufgetragen ist, in welchen sie die Erdkontaktabschnitte (22a, 22b) der Leiterplatte (18) kontaktieren, und ein doppelseitiges Klebeband ist an anderen Flächen angebracht, wobei die Leiterplatte (18) an einer Seite des doppelseitigen Klebebandes angebracht sind und die Erdkontaktabschnitte (22a, 22b) der Leiterplatte an dem Blechrahmen mittels eines leitfähigen Bindemittels angebracht sind.

5. Flüssigkristallbildschirmvorrichtung gemäß Anspruch 1, weiterhin umfassend eine Hauptkörperabdeckung (40), welche aus einem metallischen Material hergestellt ist, welches eine rechteckig geformte Bodenplatte (41f) aufweist und Seitenplatten (41a-d), welche eine vorgegebene Höhe aufweisen, welche sich an dem Umfang der Bodenplatte befindet und welche vorgesehen sind um einen gestapelten Körper abzudecken, welcher aus der Lichtführungsplatte (11), den ersten (15) und zweiten (30) Flüssigkristallbildschirmpaneelen und ähnlichem besteht, und eine Öffnung (42), welche im Wesentlichen die gleiche Größe aufweist wie die Bildschirmoberfläche des zweiten Flüssigkristallbildschirmpaneels, welches an deren Bodenplatte vorgesehen ist und welche an der rückwärtigen Oberfläche der Leiterplatte (18) vorgesehen ist.

6. Flüssigkristallbildschirmvorrichtung gemäß Anspruch 1 weiterhin umfassend einen bilderrahmenförmigen Rahmenkörper (12), welcher groß genug ist um die Lichtführungsplatte (11) aufzunehmen, wobei die Lichtführungsplatte (11), eine Lichtquelle (14), welche Licht an einem Ende (llc) der Lichtführungsplatte (11) ausstrahlt, und das erste Flüssigkristallbildschirmpaneel (15) in den Rahmenkörper (12) eingepasst sind.

## Revendications

1. Dispositif d'affichage à cristaux liquides, comprenant une plaque de guidage de lumière (11) qui mène individuellement la lumière aux deux côtés avant et arrière de la plaque de guidage de lumière;
un premier panneau d'affichage à cristaux liquides (15) disposé sur un côté de la plaque de guidage de lumière;
un deuxième panneau d'affichage à cristaux liquides (30) plus petit disposé sur l'autre côté de la plaque de guidage de lumière, où les panneaux d'affichage à cristaux liquides et la plaque de guidage de lumière sont empilés;
une carte de circuit (18), qui commande le premier et le deuxième panneaux d'affichage à cristaux liquides et disposée entre la plaque de guidage de lumière (11) et le deuxième panneau d'affichage à cristaux liquides (30) **caractérisé en ce que** la carte de circuit a des parties de contact à la terre sur au moins une partie de la face avant et de la face arrière de celle-ci; et par un cadre en feuille métallique ayant essentiellement la même taille que celle de la plaque de guidage de lumière (11) et une ouverture (26) ayant essentiellement la même taille que celle de la surface d'affichage du deuxième panneau d'affichage à cristaux liquides (30), le cadre en feuille métallique étant en contact avec les parties de contact à la terre et agencé entre la carte de circuit (18) et la plaque de guidage de lumière.

2. Dispositif d'affichage à cristaux liquides selon la revendication 1, dans lequel la carte de circuit (18) a une ouverture (21) ayant une taille prédéterminée et ledit deuxième panneau d'affichage à cristaux liquides (30) est disposé dans l'ouverture.

3. Dispositif d'affichage à cristaux liquides selon la revendication 1, dans lequel le cadre en feuille métallique (25) est fait d'une plaque métallique fine.

4. Dispositif d'affichage à cristaux liquides selon la revendication 1, dans lequel la surface du cadre en feuille métallique (25) faisant face à la carte de circuit (18) est dans une condition telle qu'un agent adhésif conducteur est revêtu sur des régions où les parties de contact à la terre (22a, 22b) de ladite carte de circuit (18) établissent un contact, et une bande adhésive double face est attachée à d'autres régions, la carte de circuit (18) étant fixée à un côté de la bande adhésive double face, et les parties de contact à la terre (22a, 22b) de la carte de circuit sont attachées au cadre en feuille métallique au moyen d'un agent adhésif conducteur.

5. Dispositif d'affichage à cristaux liquides selon la revendication 1, comprenant en plus un couvercle de corps principal (40) fait en un matériau métallique qui a une plaque inférieure de forme rectangulaire (41f) et des plaques latérales (41a-d) ayant une hauteur prédéterminée demeurant sur la périphérie de la plaque inférieure et est pourvu dans le but de couvrir un corps empilé constitué de la plaque de guidage de lumière (11), du premier (15) et du deuxième (30) panneaux d'affichage à cristaux liquides et autres analogues, et une ouverture (42), ayant essentiellement la même taille que celle de la surface d'affichage du deuxième panneau d'affichage à cristaux liquides, pourvue sur la plaque inférieure correspondante et qui est pourvue sur la surface arrière de la carte de circuit (18).

6. Dispositif d'affichage à cristaux liquides selon la revendication 1, comprenant en plus un corps de cadre en forme de photogramme (12) assez large pour accueillir ladite plaque de guidage de lumière (11), où la plaque de guidage de lumière (11), une source lumineuse (14) irradiant de la lumière sur une extrémité (11c) de la plaque de guidage de lumière (11), et le premier panneau d'affichage à cristaux liquides (15) sont ajustés dans ledit corps de cadre (12).
